# EUROPEAN PATENT SPECIFICATION

(11) **EP 2 955 258 B1**
(45) Date of publication and mention of the grant of the patent: **29.09.2021**
(21) Application number: 15171940.8
(22) Date of filing: 12.06.2015
(51) Int. Cl.: D04B 37/02

(54) **DESIGN SYSTEM FOR KNITTED FABRIC**
ENTWURFSEINRICHTUNG FÜR STRICKWAREN
DISPOSITIF DE CONCEPTION DE TRICOT

(30) Priority: 13.06.2014 JP 2014122387
(43) Date of publication of application: 16.12.2015
(73) Proprietor: SHIMA SEIKI MFG., LTD., Wakayama 641-8511 (JP)
(72) Inventor: Wakimura, Nami, Wakayama, 641-8511 (JP); Nishikawa, Fumihiro, Wakayama, 641-8511 (JP)
(74) Representative: Wagner & Geyer

(56) References cited:
- EP-A1- 0 568 700
- EP-A1- 2 273 002
- DE-A1- 4 431 898

## Description

### BACKGROUND OF THE INVENTION

### Field of the Invention

The present invention relates to a design system for a knitted fabric capable of designing a knitted fabric in which an inlay line is arranged in a base knitted fabric portion.

### Description of the Related Art

A design system for a knitted fabric for designing a knitted fabric on a monitor has been conventionally proposed (see e.g., knit paint system of Patent Document 1). In such design system for a knitted fabric, a pattern of a knitted fabric sectionalized into a knitting unit based on a gauge of a flat knitting machine is formed on a system, and design data of the knitted fabric in which a knitting code that specifies a knitting operation of the flat knitting machine is associated with the knitting unit is prepared. This way, the knitted fabric is designed by applying the knitting code that defines the knitting operation to be performed by the flat knitting machine to each knitting unit.

### PRIOR ART DOCUMENT

### PATENT DOCUMENT

[Patent Document 1] Japanese Patent Publication No. 2916990

Prior art document DE 44 31 898 A1 discloses a design device for developing a control program for a weft knitting machine, wherein, on the basis of the different input data groups, procedure flows for machine elements are created independently from each other, wherein the procedure flows are each associated to the input groups for the stitch production. The user can modify the procedure flows. After finishing of the preparation of the procedure flows, the procedure flows which are created for the respective groups are combined for generating a control program for the weft knitting machine.

From prior art document EP 0 568 700 A1 a knit design system is known wherein the operator inputs information on the shape of a fabric to be knitted and that on design indicative of the stitch structure using a keyboard input device and coordinates input device. An engineering work station forms an image of the fabric showing the state of a completed knit surface on the basis of such pieces of information as described above and shows said image on a color display as well as converts said pieces of information into sequence data representing the order of processes of knitting the fabric and also into control data showing control operation of the knitting machine.

Prior art document EP 2 273 002 A1 discloses a knitted fabric design system for a knitted fabric capable of easily designing a knitted fabric having areas different in gauge. The design system includes different-gauge information setting means for setting different-gauge information regarding knitting with a gauge different from that of initial-gauge information set in designing the knitted fabric, pattern data editing means for generating multiple pattern data having a plurality of knitting units different in gauge, based on the initial-gauge information and the different-gauge information, and editing the multiple-gauge pattern data so that knitting codes can be assigned to the respective knitting units in this multiple-gauge pattern data, display processing means for causing display means to display an edited state of the multiple-gauge pattern data, and knitting program creating means for creating a knitting program of the knitted fabric, based on the knitting codes assigned to the respective knitting units of the multiple-gauge pattern data.

### SUMMARY OF THE INVENTION

Needs to knit a knitted fabric in which an inlay line is arranged in a base knitted fabric portion is increasing with diversification in fashion of recent years. The inlay line is a line arranged so as to thread through the base knitted fabric portion by being sandwiched between stitches allocated to a front needle bed and a back needle bed when knitting the base knitted fabric portion (see e.g., Japanese Laid-Open Patent Publication No. 2007-277738). In spite of such needs, how the inlay line appears from the surface of the base knitted fabric portion cannot be accurately grasped on the design data in the conventional design system for a knitted fabric. For example, when preparing an inlay pattern such that the inlay line appears at the portion of the front stitches, the user needs to process the knitting data of the knitted fabric while imaging the state of the inlay pattern. It is, however, difficult to image the inlay pattern from the design data. Thus, an exposed state of the inlay line needs to be checked and the design data needs to be corrected by preparing a simulation image that simulates the formed state of the actual knitted fabric or by actually knitting the knitted fabric from the design data. In particular, when forming a complex pattern with the inlay line, the number of corrections may amount to plural times and thus the designing of the knitted fabric including the inlay line is not easy.

In light of the above situations, it is one of the objects of the present invention to provide a design system for a knitted fabric that can easily design a knitted fabric in which a pattern is formed with the inlay line in the base knitted fabric portion.

This and other objects are solved by a design system for a knitted fabric having the features as set forth in claim 1. Preferred embodiments of the design systems are stated in the subclaims 1 to 4. The present invention is a design system for a knitted fabric including a base information input unit for a user to input base information including a position of a knitting unit of a base knitted fabric portion and information associated with a knitting code in the knitting unit; a base memory that stores the base information; a display unit that displays display data based on the base information; and a knitting data preparing portion that prepares knitting data of the knitted fabric based on the base information. The design system for a knitted fabric further includes an inlay information input unit, an inlay information preparing part, an inlay memory, a change determining part, a change code specifying part, and a code change commanding part.
- The inlay information input unit inputs inlay display data including an exposed state and a position of an inlay line on one surface side of the base knitted fabric portion.
- The inlay information preparing part prepares inlay information associated with the exposed state and the position, as well as a non-exposed state and a position, of the inlay line based on the inlay display data.
- The inlay memory stores the inlay information.
- The change determining part references the position of the inlay line read out from the inlay memory and the knitting code corresponding to the position read out from the base memory to determine whether or not to change a knitting code of the position to realize the exposed state or the non-exposed state of the inlay line at the position.
- The change code specifying part specifies a changing knitting code for realizing the exposed state or the non-exposed state of the inlay line at the position when determined that the knitting code of the position needs to be changed.
- The code change commanding part commands the knitting data preparing portion to prepare knitting data of the knitted fabric replacing an existing knitting code of the position with the specified changing knitting code.

According to the design system for a knitted fabric of the present invention, the change code specifying part displays options of a plurality of changing knitting codes on the display unit; and the specified changing knitting code is a changing knitting code selected from the options.

According to the design system for a knitted fabric of the present invention, the inlay information input unit is further configured to input a region to arrange the inlay line in the base knitted fabric portion without specifying the exposed state of the inlay line on one surface side of the base knitted fabric portion; and the design system further includes a region information memory and an inlay display processing part.
- The region information memory stores information associated with the region to arrange the inlay line.
- The inlay display processing part references a knitting code of each knitting unit read out from the base memory and a position of the inlay line read out from the region information memory to specify the exposed state of the inlay line on the one surface side of the base knitted fabric portion and prepares the inlay display data reflecting the specified exposed state.

According to the design system for a knitted fabric of the present invention, the design system further includes a fixed state determining part, a fixing process determining part, and a fixing process commanding part.
- The fixed state determining part references the knitting code of each knitting unit read out from the base memory and the position of the inlay line read out from the inlay memory to determine whether a length of a non-fixing portion not fixed to the base knitted fabric portion in the inlay line is greater than or equal to a predetermined length.
- The fixing process determining part determines which position of the non-fixing portion to fix to the base knitted fabric portion and determines a fixing knitting code for fixing the inlay line to the base knitted fabric portion when determined that the length of the non-fixing portion is greater than or equal to the predetermined length.
- The fixing process commanding part gives a command to the knitting data preparing portion to prepare knitting data replacing a knitting code corresponding to the position of fixing the non-fixing portion with the fixing knitting code.

According to the design system for a knitted fabric, the user can directly design the pattern of the inlay line exposed on one surface side of the base knitted fabric portion. Thus, the number of times to prepare the simulation image of the knitted fabric, the number of times to actually carry out knitting, and the like can be greatly reduced. The design system for a knitted fabric automatically prepares the knitting data of the knitted fabric that takes into consideration the inlay display data based on the input of the user. Thus, the burden on the user when designing the knitted fabric including the inlay line can be greatly reduced.

According to the design system for a knitted fabric that presents options of the changing knitting code, the user can select an optimum changing knitting code that takes into consideration the structure of the base knitted fabric portion. As a result, the appearance of the knitted fabric can be improved when the flat knitting machine knits the knitted fabric using the knitting data prepared by the design system for a knitted fabric.

According to the design system for a knitted fabric including the region information memory and the inlay display processing part, the user can check how the inlay line that is arranged appears on the actual base knitted fabric portion by simply specifying the region to arrange the inlay line in the base knitted fabric portion.

According to the design system for a knitted fabric including the fixed state determining part, the fixing process determining part, and the fixing process commanding part, the non-fixing portion of the inlay line can be avoided from becoming too long when the knitted fabric is produced using the knitting data prepared by the design system for a knitted fabric, as will be described later in the embodiment.

### BRIEF DESCRIPTION OF THE DRAWINGS

Fig. 1 is a function block diagram of a design system for a knitted fabric according to an embodiment;
Figs. 2A to 2C are explanatory views showing a flow from preparing inlay display data by a user to determining a changing knitting code based on the inlay display data;
Fig. 3 is a flowchart showing a procedure for determining a changing knitting code based on inlay display data in the design system for a knitted fabric according to the embodiment;
Figs. 4A to 4D are explanatory views showing a procedure for preparing inlay display data of when a region to arrange the inlay line is specified;
Fig. 5 is a flowchart showing a procedure for preparing inlay display data in the design system for a knitted fabric according to the embodiment; and
Fig. 6 is a flowchart showing a procedure of an automatic fixing process of the inlay line in the design system for a knitted fabric according to the embodiment.

### DETAILED DESCRIPTION OF THE PREFERRED EMBODIMENTS

An embodiment of the present invention will be hereinafter described based on the drawings.

### <Overall configuration>

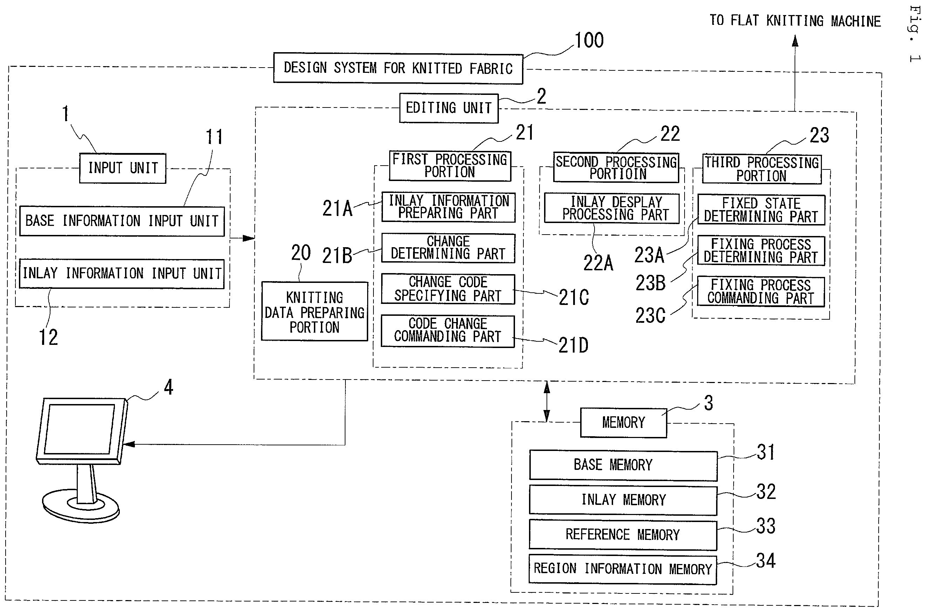

A design system 100 for a knitted fabric shown in a function block diagram of Fig. 1 includes an input unit 1, an editing unit 2, a memory 3, and a display unit 4. The design system 100 for a knitted fabric designs a knitted fabric on the display unit 4, and prepares knitting data for causing a flat knitting machine to knit the designed knitted fabric. One of the characteristics of the design system 100 for a knitted fabric lies in being configured so that the user can directly design an inlay pattern including an inlay line that is to be exposed on one surface side of a base knitted fabric portion. The configuration of each unit 1, 2, 3, and 4 will be hereinafter briefly described, and then the procedure in which the design system 100 for a knitted fabric prepares the knitting data based on the inlay pattern prepared by the user will be described.

### <<Input unit>>

The input unit 1 is used when the user edits the design data, and is configured in a form of a keyboard, a mouse, a scanner, a digitizer, and the like. In the present example, the input unit 1 is configured to function as a base information input unit 11 or an inlay information input unit 12 by switching an input mode. The input mode is, for example, switched by switching a tab or a button on a screen of the display unit. The base information input unit 11 is used when the user inputs base information including a position of a knitting unit of the base knitted fabric portion and information associated with a knitting code in the knitting unit. The inlay information input unit 12 is used when the user inputs information associated with the inlay line, for example, information such as a position of the inlay line in the base knitted fabric portion, and the like.

The knitting unit of the base knitted fabric portion is a unit for knitting one stitch determined in accordance with the gauge of the flat knitting machine. The knitting code represents the knitting operation to be carried out by the flat knitting machine in color, number, figure, or a combination thereof, for example. For instance, the knitting code represented in red is defined as the knitting code for causing the flat knitting machine to knit a front stitch, and the knitting code represented in green is defined as the knitting code for causing the flat knitting machine to knit a back stitch. A plurality of knitting operations may, of course, be defined with one knitting code. Such knitting codes are stored in the memory 3, to be described later.

### <<Editing unit>>

The editing unit 2 prepares the knitting data of the knitted fabric, and for example, can be configured with a computer. The editing unit 2 includes a knitting data preparing portion 20, a first processing portion 21, a second processing portion 22, and a third processing portion 23.

### [Knitting data preparing portion]

The knitting data preparing portion 20 prepares the knitting data set with an actual operation of a knitting needle, a setup procedure of the knitting yarn and the like, based on the base information. The knitting data prepared by the knitting data preparing portion 20 is transmitted to a storage medium such as a magnetic disc and the like, or transmitted to a flat knitting machine in a wired or wireless manner. Alternatively, the knitting data is used to prepare the simulation image of the knitted fabric.

### [First processing portion]

The first processing portion 21 has a function of commanding the knitting data preparing portion 20, when the user inputs the inlay display data, to prepare the knitting data that takes into consideration the input inlay display data. The inlay display data is data including the exposed state of the inlay line on one surface side of the base knitted fabric portion and the position thereof, and is displayed on the display unit 4 as an image.
Thus, the user can directly design the inlay pattern formed on one surface side of the base knitted fabric portion by the inlay line on the display unit 4.

The first processing portion 21 of the present example includes, as a configuration for giving a command to the knitting data preparing portion based on the inlay display data, an inlay information preparing part 21A, a change determining part 21B, a change code specifying part 21C, and a code change commanding part 21D. The processing procedures carried out by each part 21A to 21D will be described later.

### [Second processing portion]

The second processing portion 22 prepares inlay display data showing the exposed state of the inlay line on one surface side of the base knitted fabric portion when a region where the inlay line is to be arranged is specified without specifying the exposed state of the inlay line with respect to the base knitted fabric portion. In the present example, the inlay display data based on the region where the inlay line is to be arranged is prepared by an inlay display processing part 22A.

### [Third processing portion]

The third processing portion 23 has a function of specifying a non-fixing portion, which is not fixed to the base knitted fabric portion, of the inlay line and enabling the excessively long non-fixing portion to be fixed to the base knitted fabric portion. Specifically, the third processing portion 23 commands the knitting data preparing portion 20 to prepare the knitting data replacing a knitting code of the base knitted fabric portion of the position corresponding to a part of the excessively long non-fixing portion with a fixing knitting code for fixing the inlay line to the base knitted fabric portion. Such command may be made with respect to the non-fixing portion arranged on the back side (side that cannot be seen during use, for example, inner side of a sweater) of the base knitted fabric portion, may be made with respect to the non-fixing portion arranged on the front side (side that can be seen during use, for example, outer side of a sweater) of the base knitted fabric portion, and may be made with respect to both of the non-fixing portions. The command is generally made with respect to the non-fixing portion on the back side of the base knitted fabric portion.

The third processing portion 23 of the present example includes, as a configuration for enabling the excessively long non-fixing portion to be automatically fixed to the base knitted fabric portion, a fixed state determining part 23A, a fixing process determining part 23B, and a fixing process commanding part 23C. The processes carried out by each part 23A to 23C will be described later.

### <<Memory>>

The memory 3 includes a base memory 31 for storing the base information, an inlay memory 32 for storing the inlay information associated with the inlay line, a reference memory 33 for storing a fixing knitting code and a changing knitting code, to be described later, and a region information memory 34 for storing information associated with a region to arrange the inlay line. In the present example, each memory 31 to 34 is configured by a region of a part of the memory 3. The memory 3 may, of course, store other information related to the design of the knitted fabric.

### <<Display unit>>

The display unit 4 is provided to visually grasp the information associated with the design of the knitted fabric, and is not particularly limited. The display unit 4 includes, for example, a liquid crystal display and the like. The display unit 4 may partially cover the function of the input unit 1 if the touch panel is used for the display unit 4.

### <Procedure for preparing the knitting data based on inlay display data>

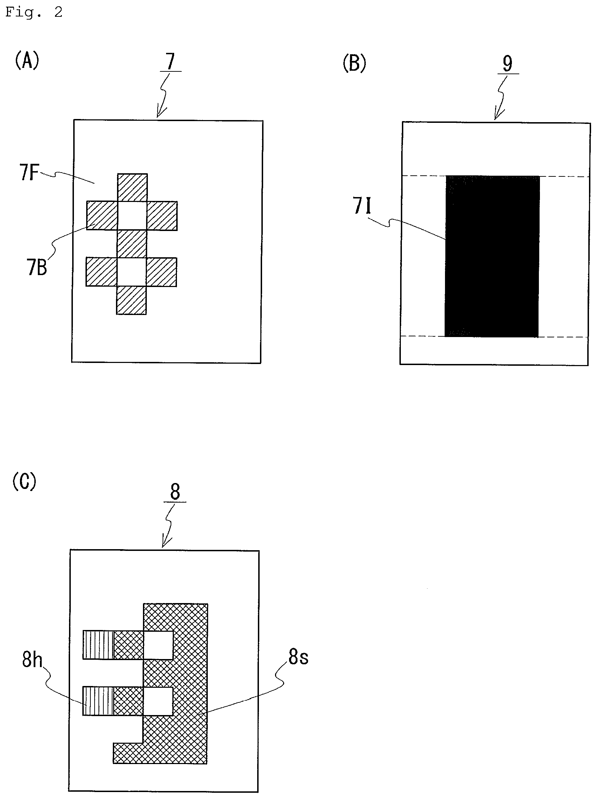

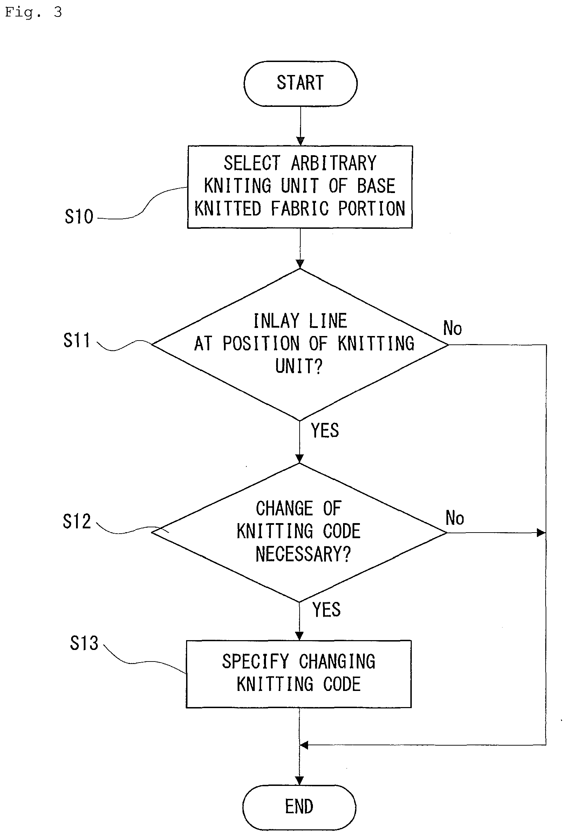

The procedure for preparing the knitting data based on the inlay display data by the design system 100 for a knitted fabric will now be described. The description will be made with reference to an explanatory view of Figs. 2A to 2C showing the procedure for designing the knitted fabric and a flowchart of Fig. 3 showing the procedure for preparing the inlay display data, in addition to the block diagram of Fig. 1.

First, similar to the conventional art, the base information (design data) related to the base knitted fabric portion is input to the base information input unit 11. The base information prepared in the past can be used for the base information. The base information is sectionalized to a plurality of knitting units. The knitting code is assigned to each knitting unit, and what kind of stitch to form at the position of each knitting unit is specified by the knitting code. The knitting code associated with each knitting unit is stored in the base memory 31 as the base information with the information associated with the position of the knitting unit.

Fig. 2A shows a state in which an example of the base information 7 of the base knitted fabric portion is displayed on the display unit 4. In the base information 7, the portion indicated with hatching is a knitting code 7B for knitting the back stitch, and the white portion is a knitting code 7F for knitting the front stitch.

As shown in Fig. 2B, the screen is switched to the input screen of an inlay display data 9, and the position, type, number and the like of an inlay line 71 exposed on the surface of the base knitted fabric portion are input. In Fig. 2B, the region shown in black shows the inlay line exposed on the surface of the base knitted fabric portion. The inlay display data 9 is the independent data different from the base information 7 of Fig. 2A. The inlay line 71 is a line that extends in the knitting width direction of the base knitted fabric portion, and is indicated with a crossbar extending in the right and left direction in the plane of drawing on the inlay display data 9. The rectangular inlay pattern of Fig. 2B is formed by lining a plurality of crossbars representing the inlay line 71 in a longitudinal direction in the plane of drawing (wale direction of base knitted fabric portion).

When the inlay display data is input, the inlay information preparing part 21A prepares the inlay information associated with the exposed state and the position, as well as the non-exposed state and the position, of the inlay line and stores the inlay information in the inlay memory 32. The inlay line is provided to thread through the front and the back of the base knitted fabric portion, and the portion exposed on the front side of the base knitted fabric portion is merely a part of the entire inlay line. For example, if the inlay line 71 is arranged over the entire width of the base knitted fabric portion in Fig. 2B, the inlay line 71 is arranged on the back side of the base knitted fabric portion on both sides (portion surrounded with dotted line) of the rectangular inlay pattern to be in the non-exposed state in which the inlay line 71 is not seen from the front side of the base knitted fabric portion. That is, the inlay information preparing part 21A of the present example obtains the position of the inlay line in the non-exposed state that does not appear in the inlay display data to prepare the inlay information based on the inlay display data input by the user. The exposed state of the inlay line on the back side of the knitted fabric can be displayed on the display unit 4 based on the inlay information.

The change determining part 21B references a position (hereinafter, position α) of the inlay line read out from the inlay memory 32 and the knitting code corresponding to the position α read out from the base memory 31 to determine whether or not to change the knitting code of the position α to realize the exposed state or the non-exposed state of the inlay line at the position α. The procedure for this determination will be described based on the flowchart of Fig. 3.

On the premise of the description of the flowchart, a description will be made on under what condition the inlay line is exposed on the front side or hidden on the back side of the base knitted fabric portion in the knitted fabric knitted with the flat knitting machine. When knitting the planar base knitted fabric portion with a flat knitting machine including the front needle bed and the back needle bed, and assuming the base knitted fabric portion seen from the side of the front needle bed as the front side, the stitches of the base knitted fabric portion knitted with the front needle bed become the front stitches and the stitches of the base knitted fabric portion knitted with the back needle bed become the back stitches. The inlay line is supplied between the front needle bed and the back needle bed, and is arranged in the base knitted fabric portion by being sandwiched by the front stitches and the back stitches. In this case, the inlay line is exposed on the front side of the base knitted fabric portion at the portion where the back stitches of the base knitted fabric portion are arranged when the base knitted fabric portion is seen from the front side. That is, when the inlay line is supplied, the inlay line is hidden on the back side of the base knitted fabric portion if the stitches are on the front needle bed, and the inlay line is exposed on the front side of the base knitted fabric portion if the stitches are on the back needle bed. In addition, when a mesh pattern and the like are provided on the base knitted fabric portion, where if a hole is formed in the base knitted fabric portion, a state (exposed state) in which the inlay line on the back side of the base knitted fabric portion can be seen through the hole is obtained.

In view of such point, the change determining part 21B reads out the base information from the base memory 31, and selects an arbitrary knitting unit of the base knitted fabric portion (S10).

The change determining part 21B reads out the inlay information from the inlay memory 32, and determines whether or not the inlay line is present at the same position as the knitting unit selected in S10 (S11). The process is terminated if the inlay line is not present at the position of the knitting unit.

If the inlay line is present at the position of the knitting unit, the change determining part 21B determines whether or not knitting code needs to be changed (S12). In making the determination, the knitting code of the knitting unit is referenced. If the knitting code indicates the inlay line to be hidden on the back side of the base knitted fabric portion although the inlay line is defined as the exposed state in the inlay information, determination is made that the knitting code needs to be changed and that the exposed state of the inlay line needs to be realized. Furthermore, if the knitting code indicates the inlay line to be exposed on the surface of the base knitted fabric portion although the inlay line is defined as the non-exposed state in the inlay information, determination is made that the knitting code needs to be changed and that the non-exposed state of the inlay line needs to be realized. If the change is not necessary, the process is terminated.

The change code specifying part 21C specifies the changing knitting code for realizing the exposed state or the non-exposed state of the inlay line based on the determination result of the change determining part 21B (S13). The changing knitting code stored in the reference memory 33 in advance is used. The change code specifying part 21C displays options for a plurality of changing knitting codes read out from the reference memory 33 on the display unit 4, and leaves to the user to select which option to use for the changing knitting code. If the changing knitting code for realizing the exposed state (non-exposed sate) is a single changing knitting code set in advance, the change code specifying part 21C automatically selects the single changing knitting code.

The changing knitting code for realizing the exposed state includes, for example, the knitting code for knitting the back stitch and the knitting code using the transfer. The inlay line to become the non-exposed state is arranged on the back side of the front stitches of the base knitted fabric portion, and thus the inlay line is arranged on the front side of the back stitch (front side of the base knitted fabric portion) by knitting the back stitches and then arranging the inlay line, so that the inlay line is in the exposed state. According to the knitting code using the transfer, the front stitches of the base knitted fabric portion are transferred from the front needle bed to the back needle bed, and then the inlay line is arranged, so that the inlay line is arranged on the front side of the front stitches and the inlay line is in the exposed state.

The changing knitting code for realizing the non-exposed state includes, for example, the knitting code for knitting the front stitches, the knitting code using the transfer, and the knitting code using spit knitting. The inlay line in the exposed state is arranged on the front side of the back stitches of the base knitted fabric portion, and thus the inlay line is arranged on the back side of the front stitches (back side of the base knitted fabric portion) by knitting the front stitches and then arranging the inlay line, so that the inlay line is in the non-exposed state. According to the knitting code using the transfer, the back stitches of the base knitted fabric portion are transferred from the back needle bed to the front needle bed and then the inlay line is arranged, so that the inlay line is arranged on the back side of the back stitches and the inlay line is in the non-exposed state. The knitting code using the split knitting is a knitting code for fixing the inlay line to the base knitted fabric portion by carrying out three operations of (1) carrying out the split knitting in which a stitch X of the base knitted fabric portion held on a knitting needle A of the front needle bed is transferred to a knitting needle B of the back needle bed (knitting needle at the position facing the knitting needle A) and a stitch Y pulled out from the transferred stitch X is formed on the knitting needle A of the front needle bed; (2) making the inlay line traverse between the stitch X and the stitch Y; (3) transferring the stitch X to overlap the stitch Y, and sandwiching the inlay line between the stitch X and the stitch Y. In this case, the inlay line sandwiched between the stitch X and the stitch Y is in a state less likely to be seen from the front side and the back side of the base knitted fabric portion.

The process shown in the flowchart of Fig. 3 is repeated with respect to all the knitting units of the base knitted fabric portion to prepare a conversion data 8 associated with to which changing knitting code to replace the knitting code of which position of the base knitted fabric portion, as shown in Fig. 2C. The portion indicated with cross hatching of the conversion data 8 indicates a changing knitting code 8s of having the inlay line in the exposed state, the portion indicated with vertical line hatching indicates a changing knitting code 8h of having the inlay line in the non-exposed state, and the outlined portion indicates that none of the changing knitting code is specified. The conversion data 8 is prepared based on the conversion knitting code specified by the user from the options.

After preparing the conversion data 8, the code change commanding part 21D gives a command to the knitting data preparing portion 20 so as to prepare the knitting data with reference to the conversion data 8 when preparing the knitting data based on the base information of the base knitted fabric portion. Specifically, the code change commanding part 21D gives a command to the knitting data preparing portion 20 to prepare the knitting data of the knitted fabric replacing the existing knitting code of the position determined that change is necessary of the base information with the changing knitting code specified by the change code specifying part 21C.

As described above, according to the design system 100 for a knitted fabric of the present example for automatically preparing the knitting data based on the inlay display data, the user merely needs to design the inlay pattern in which the inlay line is arranged on the display unit 4, and can easily design the knitted fabric including the inlay pattern. Furthermore, since the user can design the knitted fabric while directly checking the inlay pattern, the number of times to check the quality of the knitted fabric by preparing the simulation image of the knitted fabric or actually carry out the knitting can be greatly reduced.

### <Procedure for preparing inlay display data>

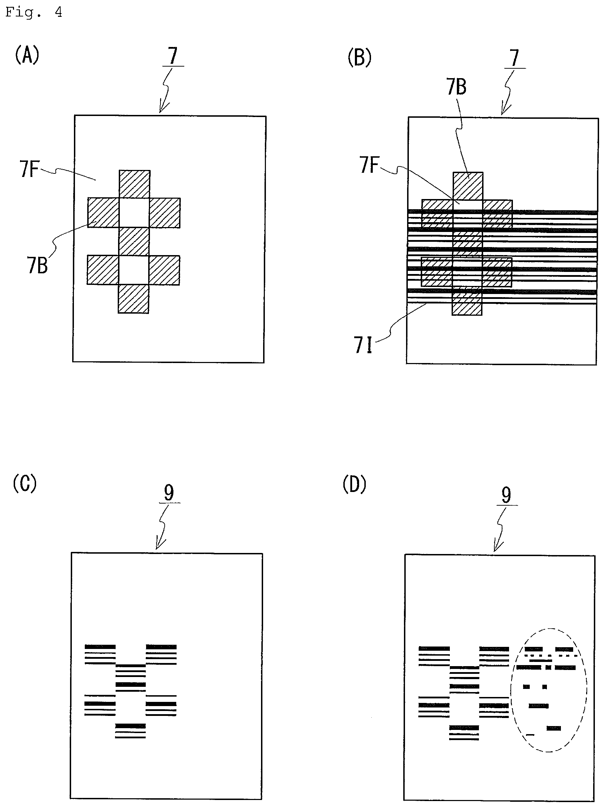

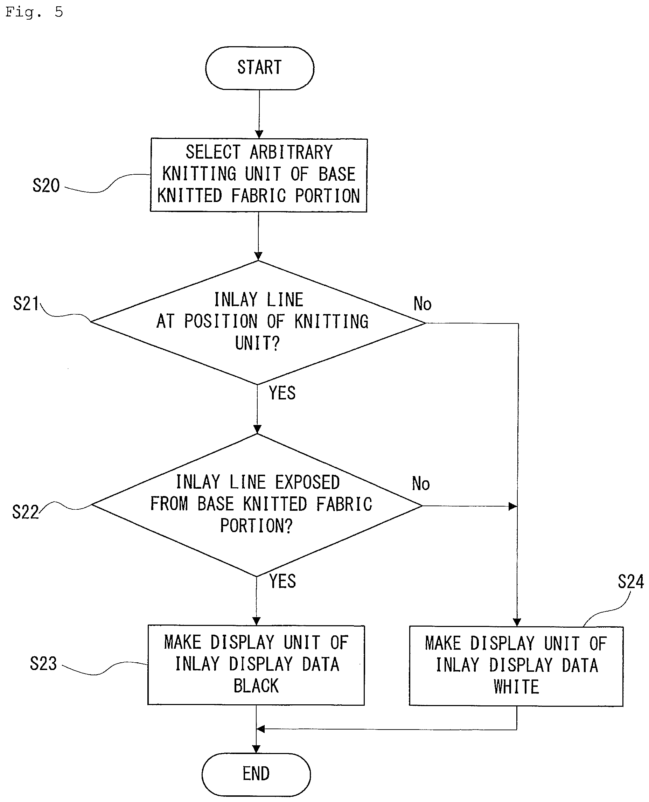

The design system 100 for a knitted fabric of the present example has a function of preparing the inlay display data showing the exposed state of the inlay line when a region to arrange the inlay line is specified with respect to the existing base knitted fabric portion. This function is carried out by the inlay display processing part 22A of the second processing portion 22 of the editing unit 2. The procedure for preparing the inlay display data by the second processing portion 22 will now be described. The description will be made with reference to an explanatory view of Figs. 4A to 4D and a flowchart of Fig. 5 showing the procedure for preparing the inlay display data, in addition to the block diagram of Fig. 1.

First, similar to the procedure for preparing the knitting data described above, the base information associated with the base knitted fabric portion is input to the base information input unit 11. In Fig. 4A, an example of inputting the base information 7 same as the base information 7 shown in Fig. 2A will be described.

Next, as shown in Fig. 4B, a region to arrange the inlay line in the base knitted fabric portion is input without specifying the exposed state of the inlay line 71 through the inlay information input unit 12. The input information is stored in a region information memory 34.

The inlay display processing part 22A of the second processing portion 22 that acquired the base information and the inlay information prepares the inlay display data including a plurality of display units using the base information read out from the base memory 31 and the inlay information read out from the region information memory 34. The procedure for preparing the inlay display data will be described based on the flowchart of Fig. 5.

First, the inlay display processing part 22A reads out the base information from the base memory 31, and selects an arbitrary knitting unit of the base knitted fabric portion (S20).

Then, the inlay display processing part 22A reads out the inlay information from the region information memory 34, and determines whether or not the inlay line is present at the same position as the knitting unit selected in S20 (S21). If the inlay line is not present at the position of the knitting unit, white is assigned to the display unit of the inlay display data corresponding to the selected knitting unit (S24).

If the inlay line is present at the position of the knitting unit, the inlay display processing part 22A determines whether or not the inlay line is exposed on the front side of the base knitted fabric portion (S22). Upon making the determination, the knitting code of the knitting unit is referenced. For example, if the referenced knitting code causes the flat knitting machine to knit the front stitches, the inlay display processing part 22A determines that the inlay line is not exposed on the front side of the base knitted fabric portion since the inlay line is arranged on the back side of the front stitch, and assigns white to the display unit corresponding to the selected knitting unit in the inlay display data (S24). On the other hand, if the referenced knitting code causes the flat knitting machine to knit the back stitch, for example, the inlay display processing part 22A determines that the inlay line is exposed on the front side of the base knitted fabric portion since the inlay line is arranged on the front side of the back stitch, and assigns black to the display unit of the inlay display data corresponding to the selected knitting unit (S23). The color to be assigned to the display unit is not particularly limited. The color to assign to the display unit is selected so that the exposed portion and the non-exposed portion of the inlay line can be distinguished.

The process shown in the flowchart of Fig. 5 is repeated with respect to all the knitting units of the base knitted fabric portion to prepare the inlay display data showing the exposed state of the inlay line. For example, if the inlay line 71 extending over the entire width in the right and left direction is arranged in the base information 7 of the base knitted fabric portion, as shown in Fig. 4B, the inlay display data 9 shown in Fig. 4C is prepared. As shown in the inlay display data 9, the state in which the inlay line is exposed can be visually recognized only at the portion where the base knitted fabric portion is the back stitch in the inlay line arranged in the base knitted fabric portion. The knitting data that takes into consideration the inlay display data 9 shown in Fig. 4C can, of course, also be prepared by the first processing portion 21.

As described above, if the exposed state of the inlay line in the existing base knitted fabric portion can be checked with the inlay display data, an inspiration related to a new inlay pattern may be obtained using the base information prepared in the past. As shown with the portion surrounded with a dotted line in Fig. 4D, the exposed portion of the inlay line 71 may be further added to the inlay display data, and thus the degree of freedom of the inlay pattern is extremely high.

### <<Fixing of non-fixing portion of inlay line>>

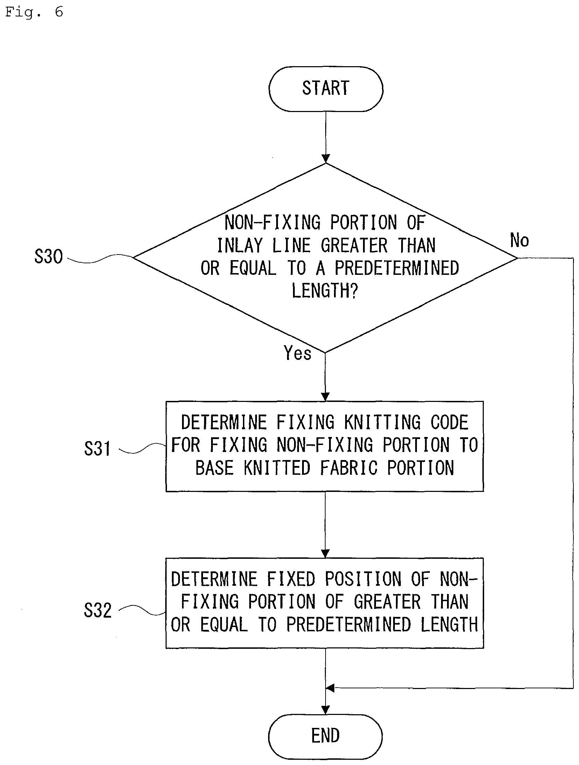

Furthermore, the design system 100 for a knitted fabric of the present example has a function of preparing the knitting data in which the non-fixing portion, which is not fixed to the base knitted fabric portion, in the inlay line is fixed to the base knitted fabric portion. This function is carried out by the third processing portion 23 of the editing unit 2. The process carried out by the third processing portion 23 will be hereinafter described based on the block view of Fig. 1 and a flowchart of Fig. 6.

First, a fixed state determining part 23A determines whether or not a length of the non-fixing portion, which is arranged on the back side of the base knitted fabric portion and which is not fixed to the base knitted fabric portion, in the inlay line is greater than or equal to a predetermined length (S30). The knitting code of each knitting unit read out from the base memory 31 and the position of the inlay line read out from the inlay memory 32 are used for this determination. For example, whether the length of the non-fixing portion is the length across ten or more knitting units is determined. If the length of the non-fixing portion is the length across nine or less knitting units as a result of the determination, the process is terminated. The number of knitting units to use for the criterion of determination is appropriately determined according to the thickness of the knitting yarn and the gauge of the flat knitting machine, and is not particularly limited.

If determined that the length of the non-fixing portion is greater than or equal to a predetermined length by the fixing state determining part 23A, the fixing process determining part 23B determines a fixing knitting code for fixing the non-fixing portion of the inlay line to the base knitted fabric portion (S31). The fixing knitting code is a knitting code for fixing the inlay line to the base knitted fabric portion, and a predetermined knitting code may be used. For example, a fixing knitting code is stored in the reference memory 33.

The fixing knitting code representatively includes the following three knitting codes. Which fixing knitting code is to be used by the fixing process determining part 23B may be selected by the user at the initial setting of the design system 100 for a knitted fabric. Of course, the fixing knitting code to use may be changed in the setting screen of the system.

### [Knitting code for carrying out tuck]

Knitting code for fixing the inlay line to the stitch of the base knitted fabric portion by tuck. In this case, the inlay line is in a state less likely to be seen from the front side of the base knitted fabric portion.

### [Knitting code for carrying out transfer]

Knitting code for fixing the inlay line to the base knitted fabric portion so that the inlay line is passed from the back side toward the front side, and then again passed to the back side of the base knitted fabric portion by carrying out three operations: (1) transfer the stitches of the base knitted fabric portion held on the front needle bed to the back needle bed; (2) traverse the inlay line across the transferred stitches; (3) return the transferred stitches to the front needle bed. In this case, the inlay line appears on the front side of the base knitted fabric portion. The portion appearing on the front may be assumed as a part of the design of the knitted fabric depending on the design of the entire knitted fabric.

### [Knitting code for carrying out split knitting]

The knitting code for carrying out split knitting has already been described. In this case, the inlay line is in a state less likely to be seen from the front side and the back side of the base knitted fabric portion.

The fixing process determining part 23B determines which position of the non-fixing portion having a length of greater than or equal to the predetermined length to fix to the base knitted fabric portion (S32). For example, the position to fix may be the middle of the non-fixing portion or may be the position in the vicinity thereof, or may be the position of every predetermined number (e.g., every one to three). The position of the non-fixing portion may also be selectable by the user in the initial setting of the system and the subsequent change in setting. The order of determining the fixing knitting code and determining the fixing position may be arbitrary.

The processes shown in the flowchart of Fig. 6 are repeated with respect to all the non-fixing portions to prepare the conversion data for the fixing process. The conversion data shows with what fixing method and at which position of the base knitted fabric portion to fix the inlay line. When such conversion data can be obtained, the fixing process commanding part 23C gives a command to the knitting data preparing portion 20 to prepare the knitting data replacing the knitting code of the base knitted fabric portion corresponding to the position determined in S32 with the fixing code when the knitting data is prepared by the knitting data preparing portion 20.

The conversion data may be notified to the user through the display unit 4. The fixing knitting code selected by the fixing process determining part 23B may be changed to a different fixing knitting code by the user. For example, in the case of the knitting code for carrying out the transfer, the inlay line is exposed on the front side of the base knitted fabric portion at the position the inlay line is fixed to the base knitted fabric portion. If the user determines that such exposure may impair the design of the entire knitted fabric, the user may change the knitting code using the transfer to the knitting code using the tuck or the knitting code using the split knitting.

According to the third processing portion 23 described above, the non-fixing portion of the inlay line can be avoided from becoming too long when the knitted fabric is produced using the knitting data prepared by the design system 100 for a knitted fabric. If the inlay line of the knitted fabric is too long, drawbacks may occur, for example, such that the finger of the user and the like may get caught at the inlay line when using the knitted fabric thus damaging the knitted fabric. However, such drawbacks can be suppressed by shortening the non-fixing portion of the inlay line. In particular, it is important to make the non-fixing portion of the inlay line on the inner side of the knitwear short in a knitwear such as a sweater.

## Claims

1. A design system (100) for a knitted fabric including:
a base information input unit (11) for a user to input base information, sectionalized to a plurality of knitting units, including a position of a knitting unit, which is a unit for knitting one stitch determined in accordance with the gauge of the flat knitting machine, of a base knitted fabric portion and information associated with a knitting code, representing the knitting operation to be carried out, in the knitting unit;
a base memory (31) that stores the base information;
a display unit (4) that displays display data based on the base information; and
a knitting data preparing portion (20) that prepares knitting data of the knitted fabric based on the base information; the design system **characterized by**,
an inlay information input unit (12) for inputting inlay display data in each knitting unit including an exposed state of an inlay line and a position of the inlay line on one surface side of the base knitted fabric portion wherein the inlay line is arranged so as to thread through the base knitted fabric portion by being sandwiched between stitches allocated to a front needle bed and a back needle bed when knitting the base knitted fabric portion;
an inlay information preparing part (21A) that prepares inlay information associated with the exposed state and the position, as well as a non-exposed state of the inlay line and a position, of the inlay line based on the inlay display data;
an inlay memory (32) that stores the inlay information;
a change determining part (21B) that references a position α of the inlay line read out from the inlay memory (32) and the knitting code corresponding to the position α read out from the base memory to determine whether or not to change a knitting code of the position α to realize the exposed state or the non-exposed state of the inlay line at the position a;
a change code specifying part (21C) that specifies a changing knitting code for realizing the exposed state or the non-exposed state of the inlay line at the position α when determined that the knitting code of the position α needs to be changed; and
a code change commanding part (21D) that commands the knitting data preparing portion to prepare knitting data of the knitted fabric replacing an existing knitting code of the position α with a knitting code specified by the change code specifying part (21C).

2. The design system (100) for a knitted fabric according to claim 1, wherein
the change code specifying part (21C) displays options of a plurality of changing knitting codes on the display unit (4); and
the knitting code specified by the change code specifying part (21C) is a changing knitting code selected from the options.

3. The design system (100) for a knitted fabric according to claim 1 or 2, wherein
the inlay information input unit (12) is further configured to input a region to arrange the inlay line in the base knitted fabric portion without specifying the exposed state of the inlay line on one surface side of the base knitted fabric portion; and
the design system further includes,
a region information memory (34) that stores information associated with the region to arrange the inlay line, and
an inlay display processing part (22A) that references a knitting code of each knitting unit read out from the base memory (31) and a position α of the inlay line read out from the region information memory (34) to specify the exposed state of the inlay line on the one surface side of the base knitted fabric portion and prepare the inlay display data reflecting the specified exposed state.

4. The design system (100) for a knitted fabric according to any one of claims 1 to 3, further including:
a fixed state determining part (23A) that references the knitting code of each knitting unit read out from the base memory (31) and the position α of the inlay line read out from the inlay memory (32) to determine whether a length of a non-fixing portion not fixed to the base knitted fabric portion in the inlay line is greater than or equal to a predetermined length;
a fixing process determining part (23B) that determines which position of the non-fixing portion to fix to the base knitted fabric portion and determines a fixing knitting code for fixing the inlay line to the base knitted fabric portion when determined that the length of the non-fixing portion is greater than or equal to the predetermined length; and
a fixing process commanding part (23C) that gives a command to the knitting data preparing portion to prepare knitting data replacing a knitting code corresponding to the position of fixing the non-fixing portion with the fixing knitting code.

## Patentansprüche

1. Entwurfssystem (100) für ein Gestrick, umfassend:
eine Basisinformationen-Eingabeeinheit (11) für einen Benutzer zum Eingeben von Basisinformationen, die auf eine Vielzahl von Strickeinheiten aufgegliedert sind und eine Position einer Strickeinheit eines Basisgestrickteils, die eine gemäß der Feinheit der Flachstrickmaschine bestimmte Einheit für das Stricken einer Masche ist, und Informationen, die mit einem die auszuführende Strickoperation wiedergebenden Strickcode in der Strickeinheit assoziiert sind, enthalten,
einen Basisspeicher (31), der die Basisinformationen speichert,
eine Anzeigeeinheit (4), die Anzeigedaten basierend auf den Basisinformationen anzeigt, und
einen Strickdaten-Vorbereitungsteil (20), der Strickdaten des Gestricks basierend auf den Basisinformationen vorbereitet,
wobei das Entwurfssystem **gekennzeichnet ist durch**:
eine Einlegeinformationen-Eingabeeinheit (12) zum Eingeben von Einlegeanzeigedaten in jeder Strickeinheit, die einen exponierten Zustand einer Einlegelinie und eine Position der Einlegelinie auf einer Oberflächenseite des Basisgestrickteils enthalten, wobei die Einlegelinie derart angeordnet ist, dass sie sich **durch** den Basisgestrickteil windet, indem sie zwischen den einem vorderen Nadelbett und einem hinteren Nadelbett zugewiesenen Maschen eingeschlossen wird, wenn der Basisgestrickteil gestrickt wird,
einen Einlegeinformationen-Vorbereitungsteil (21A), der mit dem exponierten Zustand und der Position und mit einem nicht-exponierten Zustand und einer Position der Einlegelinie assoziierte Einlegeinformationen basierend auf den Einlegeanzeigedaten vorbereitet,
einen Einlegespeicher (32), der die Einlegeinformationen speichert,
einen Änderungsbestimmungsteil (21B), der auf eine aus dem Einlegespeicher (32) ausgelesene Position α der Einlegelinie und den Strickcode in Entsprechung zu der aus dem Basisspeicher ausgelesenen Position α Bezug nimmt, um zu bestimmen, ob ein Strickcode der Position α geändert werden soll, um den exponierten Zustand oder den nicht-exponierten Zustand der Einlegelinie an der Position α zu realisieren,
einen Änderungscode-Spezifizierungsteil (21C), der einen Änderungsstrickcode für das Realisieren des exponierten Zustands oder des nicht-exponierten Zustands der Einlegelinie an der Position α spezifiziert, wenn bestimmt wird, dass der Strickcode der Position α geändert werden soll, und
einen Codeänderungs-Befehlsteil (21D), der den Strickdaten-Vorbereitungsteil anweist, Strickdaten des Gestricks vorzubereiten, die einen bestehenden Strickcode der Position α **durch** einen **durch** den Änderungscode-Spezifizierungsteil (21C) spezifizierten Strickcode ersetzen.

2. Entwurfssystem (100) für ein Gestrick nach Anspruch 1, wobei:
der Änderungscode-Spezifizierungsteil (21C) Optionen einer Vielzahl von Änderungsstrickcodes an der Anzeigeeinheit (4) anzeigt, und
der durch den Änderungscode-Spezifizierungsteil (21C) spezifizierte Strickcode ein aus den Optionen ausgewählter Strickcode ist.

3. Entwurfssystem (100) für ein Gestrick nach Anspruch 1 oder 2, wobei:
die Einlegeinformationen-Eingabeeinheit (12) weiterhin konfiguriert ist zum Eingeben eines Bereichs für das Anordnen der Einlegelinie in dem Basisgestrickteil, ohne den exponierten Zustand der Einlegelinie auf einer Oberflächenseite des Basisgestrickteils zu spezifizieren, und
das Entwurfssystem weiterhin umfasst:
einen Bereichsinformationenspeicher (34), der mit dem Bereich für das Anordnen der Einlegelinie assoziierte Informationen speichert, und
einen Einlegeanzeige-Verarbeitungsteil (22A), der auf einen aus dem Basisspeicher (31) ausgelesenen Strickcode jeder Strickeinheit und eine aus dem Bereichsinformationenspeicher (34) ausgelesene Position α der Einlegelinie Bezug nimmt, um den exponierten Zustand der Einlegelinie auf der Seite der einen Oberfläche des Basisgestrickteils zu spezifizieren und die den spezifizierten exponierten Zustand wiedergebenden Einlegeanzeigedaten vorzubereiten.

4. Entwurfssystem (100) für ein Gestrick nach einem der Ansprüche 1 bis 3, das weiterhin umfasst:
einen Fixiertzustand-Bestimmungsteil (23A), der auf den aus dem Basisspeicher (31) ausgelesenen Strickcode jeder Strickeinheit und auf die aus dem Einlegespeicher (32) ausgelesene Position α der Einlegelinie Bezug nimmt, um zu bestimmen, ob die Länge eines nicht an dem Basisgestrickteil fixierten Nicht-Fixierungsteils in der Einlegelinie größer oder gleich einer vorbestimmten Länge ist,
einen Fixierungsprozess-Bestimmungsteil (23B), der bestimmt, welche Position des Nicht-Fixierungsteils an dem Basisgestrickteil fixiert werden soll, und einen Fixierungsstrickcode für das Fixieren der Einlegelinie an dem Basisgestrickteil bestimmt, wenn bestimmt wird, dass die Länge des Nicht-Fixierungsteils größer oder gleich der vorbestimmten Länge ist, und
einen Fixierungsprozess-Befehlsteil (23C), der einen Befehl an den Strickdaten-Vorbereitungsteil gibt, um Strickdaten vorzubereiten, die einen Strickcode in Entsprechung zu der Position für das Fixieren des Nicht-Fixierungsteils durch den Fixierungsstrickcode ersetzen.

## Revendications

1. Système de conception (100) pour un tissu tricoté comportant :
une unité d'entrée d'informations de base (11) pour qu'un utilisateur entre des informations de base, distribuées entre une pluralité d'unités de tricotage, comportant une position d'une unité de tricotage, qui est une unité destinée à tricoter un point déterminé en fonction du gabarit de la machine à tricoter à plat, d'une partie de tissu tricoté de base et des informations associées à un code de tricotage, représentant l'opération de tricotage à effectuer, dans l'unité de tricotage ;
une mémoire de base (31) qui stocke les informations de base ;
une unité d'affichage (4) qui affiche des données d'affichage sur la base des informations de base ; et
une partie de préparation de données de tricotage (20) qui prépare des données de tricotage du tissu tricoté sur la base des informations de base ; le système de conception étant **caractérisé par**,
une unité d'entrée d'informations d'incrustation (12) destinée à entrer des données d'affichage d'incrustation dans chaque unité de tricotage comportant un état exposé d'une ligne d'incrustation et une position d'une ligne d'incrustation sur un côté de surface de la partie de tissu tricoté de base dans lequel la ligne d'incrustation est agencée de sorte à traverser la partie de tissu tricoté en étant interposée entre des points attribués à un lit d'aiguilles avant et à un lit d'aiguilles arrière pendant le tricotage de la partie de tissu tricoté ;
une partie de préparation d'informations d'incrustation (21A) qui prépare des informations d'incrustation associées à l'état exposé et à la position de la ligne d'incrustation, ainsi qu'à un état non exposé et à une position de la ligne d'incrustation, sur la base des données d'affichage d'incrustation ;
une mémoire d'incrustation (32) qui stocke les informations d'incrustation ;
une partie de détermination de modification (21B) qui référence une position α de la ligne d'incrustation extraite de la mémoire d'incrustation (32) et le code de tricotage correspondant à la position α extraite de la mémoire de base pour déterminer s'il faut modifier ou non un code de tricotage de la position α pour réaliser l'état exposé ou l'état non exposé de la ligne d'incrustation au niveau de la position α ;
une partie de spécification de code de modification (21C) qui spécifie un code de tricotage changeant pour réaliser l'état exposé ou l'état non exposé de la ligne d'incrustation au niveau de la position α lorsqu'il est déterminé que le code de tricotage de la position α doit être modifié ; et
une partie de commande de modification de code (21D) qui commande à la partie de préparation de données de tricotage de préparer des données de tricotage du tissu tricoté remplaçant un code de tricotage existant de la position α par un code de tricotage spécifié par la partie de spécification de code de modification (21C).

2. Système de conception (100) pour un tissu tricoté selon la revendication 1, dans lequel
la partie de spécification de code de modification (21C) affiche des options d'une pluralité de codes de tricotage changeants sur l'unité d'affichage (4) ; et
le code de tricotage changeant spécifié par la partie de spécification de code de modification (21C) est un code de tricotage changeant sélectionné parmi les options.

3. Système de conception (100) pour un tissu tricoté selon la revendication 1 ou 2, dans lequel
l'unité d'entrée d'informations d'incrustation (12) est en outre configurée pour entrer une région pour agencer la ligne d'incrustation dans la partie de tissu tricoté de base sans spécifier l'état exposé de la ligne d'incrustation sur un côté donné de surface de la partie de tissu tricoté de base ; et
le système de conception comporte en outre,
une mémoire d'informations de région (34) qui stocke des informations associées à la région pour agencer la ligne d'incrustation, et
une partie de traitement d'affichage d'incrustation (22A) qui référence un code de tricotage de chaque unité de tricotage extrait de la mémoire de base (31) et une position α de la ligne d'incrustation extraite de la mémoire d'informations de région (34) pour spécifier l'état exposé de la ligne d'incrustation sur le côté donné de surface de la partie de tissu tricoté de base et pour préparer les données d'affichage d'incrustation reflétant l'état exposé spécifié.

4. Système de conception (100) pour un tissu tricoté selon l'une quelconque des revendications 1 à 3, comportant en outre :
une partie de détermination d'état fixe (23A) qui référence le code de tricotage de chaque unité de tricotage extrait de la mémoire de base (31) et la position α de la ligne d'incrustation extraite de la mémoire d'incrustation (32) pour déterminer si une longueur d'une partie de non-fixation non fixée à la partie de tissu tricoté de base dans la ligne d'incrustation est supérieure ou égale à une longueur prédéterminée ;
une partie de détermination de processus de fixation (23B) qui détermine quelle position de la partie de non-fixation doit être fixée à la partie de tissu tricoté de base et détermine un code de tricotage de fixation destiné à fixer la ligne d'incrustation à la partie de tissu tricoté de base lorsqu'il est déterminé que la longueur de la partie de non-fixation est supérieure ou égale à la longueur prédéterminée ; et
une partie de commande de processus de fixation (23C) qui donne une commande à la partie de préparation de données de tricotage pour préparer des données de tricotage remplaçant un code de tricotage correspondant à la position de fixation de la partie de non-fixation avec le code de tricotage de fixation.
